# EUROPEAN PATENT APPLICATION

(11) **EP 4 190 863 A1**
(43) Date of publication of application: **07.06.2023**
(21) Application number: 22210135.4
(22) Date of filing: 29.11.2022
(51) Int. Cl.: C08L 97/00, C08L 23/06, C08L 23/12, C08L 25/08, C08L 33/12

(54) **THERMOPLASTIC COMPOSITION, THERMOPLASTIC COMPOSITE, AND METHOD FOR PRODUCING THERMOPLASTIC COMPOSITE**

(30) Priority: 02.12.2021 US 202163285230 P
(71) Applicant: Formosa Plastics Corporation, Kaohsiung City (TW); The Texas A&M University System, College Station, Texas 77840 (US)
(72) Inventor: Chen, Kwang-Ming, Kaohsiung City (TW); Kao, Jung-Hung, Kaohsiung City (TW); Hsieh, Kun-Pei, Kaohsiung City (TW); Chang, Chao-Shun, Kaohsiung City (TW); Lin, Yen-Ting, Kaohsiung City (TW); Sue, Hung-Jue, College Station, TX 77845 (US)
(74) Representative: Lang, Christian

(57) **Abstract**

The present invention relates to a thermoplastic composition, a thermoplastic composite, and a method for producing the thermoplastic composite. In the method for producing the thermoplastic composite, a polymer, an acid-modified lignin with a specific element content and a compatibilizer with a specific melt flow index and a specific maleic anhydride content are used to produce the thermoplastic composite. Hydroxy groups of the acid-modified lignin react with maleic anhydride groups of the compatibilizer to generate ester bonds via an in-situ reaction catalyzed by acidic groups of the acid-modified lignin to enhance compatibility between the polymer and the lignin, thereby increasing a mechanical strength of the resulted thermoplastic composite.

## Description

### BACKGROUND

### Field of Invention

The present invention relates to a thermoplastic composition, a thermoplastic composite, and a method for producing the thermoplastic composite, and more particularly relates to the method for producing the thermoplastic composite by using the thermoplastic composition comprising an acid-modified lignin and the resulted thermoplastic composite.

### Description of Related Art

In conventional method for producing a thermoplastic composite, a polymer and a filler are blended with each other, and the filler is used to reinforce a mechanical strength of the thermoplastic composite. For example, the filler can be a carbon-based material (such as carbon fibers) and an inorganic material (such as glass particles). These materials are bioincompatible, and thus suffered from environmental issues.

In addition, the filler is difficult to disperse uniformly within the polymer, and therefore it is necessary to perform a surface modification to the filler to improve compatibility between the polymer and the filler. The surface modification can be performed by applying compatibilizers (such as coupling agents) to the filler. However, the conventional compatibilizers cannot provide good compatibility for a polar polymer as well as for a nonpolar polymer.

In view of these, it is necessary to develop a new method for producing a new thermoplastic composite by using a new thermoplastic composition to solve the aforementioned drawbacks.

### SUMMARY

Accordingly, an aspect of the present invention is to provide a thermoplastic composition. The thermoplastic composition comprises an acid-modified lignin with a specific element content and a compatibilizer with a specific melt flow index and a specific maleic anhydride content to enhance compatibility between the polar or nonpolar polymer and the lignin, thereby increasing a mechanical strength of the resulted thermoplastic composite.

Another aspect of the present invention is to provide a method for producing a thermoplastic composite. In the method for producing a thermoplastic composite, the aforementioned thermoplastic composition is used to produce the thermoplastic composite.

Yet another aspect of the present invention is to provide a thermoplastic composite. The thermoplastic composite is made from the aforementioned thermoplastic composition.

According to one aspect of the present invention, a thermoplastic composition is provided. The thermoplastic composition comprises a polymer, an acid-modified lignin comprising acidic groups on a surface of the acid-modified lignin, and a compatibilizer with a melt flow index of 14 g/10 min to 28 g/10 min. The polymer is one or more selected from a group consisting of polyethylene, polypropylene and polymethyl methacrylate. The acidic groups comprise an element, an element content of the element is 10 weight percent to 20 weight percent, based on a weight of the acid-modified lignin as 100 weight percent. The compatibilizer is a maleic anhydride grafted copolymer, the maleic anhydride grafted copolymer is made of styrene, ethylene and butylene, a maleic anhydride content of the compatibilizer is 1.0 weight percent to 2.5 weight percent, and a polystyrene content of the compatibilizer is 20 weight percent to 40 weight percent. A content of the polymer is 60 weight percent to 95 weight percent, a content of the acid-modified lignin is 3 weight percent to 35 weight percent and a content of the compatibilizer is 1 weight percent to 7 weight percent, based on a weight of the thermoplastic composition as 100 weight percent.

According to another embodiment of the present invention, a melt flow index of the polymer is 5 g/10 min to 15 g/10 min.

According to yet another embodiment of the present invention, the acidic groups comprise phosphoric acid groups, sulfuric acid groups and/or nitric acid groups.

According to yet another embodiment of the present invention, the element comprises phosphorus, sulfur and/or nitrogen.

According to yet another embodiment of the present invention, an average particle size of the acid-modified lignin is 0.05 µm to 10 µm.

According to yet another embodiment of the present invention, a melt flow index of the compatibilizer is 20 g/10 min to 23 g/10 min.

According to yet another embodiment of the present invention, a ratio of a density of the polymer to a density of the compatibilizer is 0.9 to 1.1.

According to yet another embodiment of the present invention, a ratio of the content of the acid-modified lignin to the content of the compatibilizer is 2.0 to 6.0.

According to another aspect of the present invention, a method for producing a thermoplastic composite is provided. In the method for producing the thermoplastic composite, the thermoplastic composition is provided, the thermoplastic composition is heated to 160 °C to 190 °C, and after the thermoplastic composition is heated, the thermoplastic composition is blended for 5 minutes to 8 minutes at 160 °C to 190 °C to obtain the thermoplastic composite. The thermoplastic composition comprises a polymer, an acid-modified lignin, and a compatibilizer. During the blending of the thermoplastic composition, hydroxy groups of the acid-modified lignin react with maleic anhydride groups of the compatibilizer to generate ester bonds via an in-situ reaction, and the in-situ reaction is catalyzed by acidic groups of the acid-modified lignin.

According to yet another aspect of the present invention, a thermoplastic composite is provided. The thermoplastic composite comprises a polymer matrix formed from a polymer and a plurality of core-shell particles embedded in the polymer matrix. The polymer is one or more selected from a group consisting of polyethylene, polypropylene and polymethyl methacrylate. The plurality of the core-shell particles each comprises a core formed from an acid-modified lignin and a shell layer encapsulating the core. The acid-modified lignin comprises acidic groups on a surface of the acid-modified lignin, the acidic groups comprise an element, an element content of the element is 10 weight percent to 20 weight percent, based on a weight of the acid-modified lignin as 100 weight percent. The shell layer is formed from a compatibilizer with a melt flow index of 14 g/10 min to 28 g/10 min, the compatibilizer is a maleic anhydride grafted copolymer, the maleic anhydride grafted copolymer is made of styrene, ethylene and butylene, a maleic anhydride content of the compatibilizer is 1.0 weight percent to 2.5 weight percent, and a polystyrene content of the compatibilizer is 20 weight percent to 40 weight percent. An average particle size of the plurality of the core-shell particles is 0.1 µm to 11 µm.

According to yet another embodiment of the present invention, the shell layer is bonded to the core via ester bonds.

According to yet another embodiment of the present invention, a thickness of the shell layer is 0.1 µm to 0.8 µm.

According to yet another embodiment of the present invention, a dispersity of the plurality of the core-shell particles is 1 × 10⁴ grain/mm² to 6 x 10⁴ grain/mm².

According to yet another embodiment of the present invention, an impact strength of the thermoplastic composite is more than 1.1 kJ/m².

According to yet another embodiment of the present invention, a Young's modulus of the thermoplastic composite is more than 2.0 GPa.

In an application of the thermoplastic composition, the thermoplastic composite, and the method for producing the thermoplastic composite of the present invention, in which the polymer, the acid-modified lignin with the specific element content and the compatibilizer with the specific melt flow index and the specific maleic anhydride content are used to produce the thermoplastic composite. Hydroxy groups of the acid-modified lignin react with maleic anhydride groups of the compatibilizer to generate ester bonds via the in-situ reaction catalyzed by acidic groups of the acid-modified lignin to enhance the compatibility between the polymer and the lignin, thereby increasing the mechanical strength of the resulted thermoplastic composite.

### BRIEF DESCRIPTION OF THE DRAWINGS

The patent or application file contains at least one drawing executed in color. Copies of this patent or patent application publication with color drawing(s) will be provided by Office upon request and payment of the necessary fee. For a better understanding of the embodiments of the present invention and their advantages, reference is made to the following description, which is accompanied by the corresponding drawings. The description regarding to the drawings as follows:
Fig. 1 illustrates a flow chart of a method for producing a thermoplastic composite according to an embodiment of the present invention.
Fig. 2 illustrates a schematic diagram of a thermoplastic composite according to an embodiment of the present invention.
Figs. 3 to 4 are optical microscopy images of thermoplastic composites of embodiments 1 to 2 of the present invention, respectively.
Fig. 5 is an optical microscopy image of thermoplastic composite of comparative embodiment 2 of the present invention.
Figs. 6 to 7 are optical microscopy images of thermoplastic composites of embodiments 3 to 4 of the present invention, respectively.
Fig. 8 is an optical microscopy image of thermoplastic composite of comparative embodiment 4 of the present invention.

### DETAILED DESCRIPTION

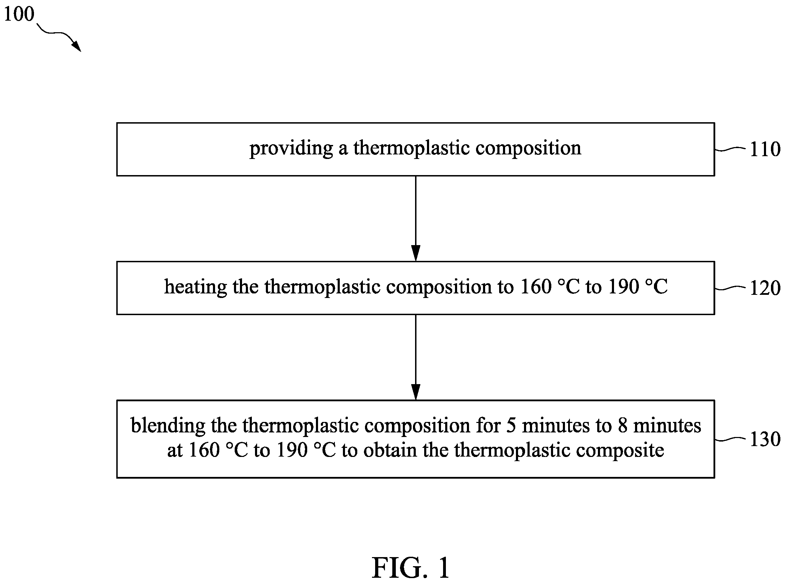

Referring to Fig. 1, in a method 100 for producing a thermoplastic composite, a thermoplastic composition is provided, shown as operation 110. The thermoplastic composition comprises a polymer, an acid-modified lignin and a compatibilizer. The polymer can be polar polymer and/or nonpolar polymer. The polar polymer can include, but not limited to, polymers comprising acidic groups such as acrylic acid group, and nonpolar polymer can include, but not limited to, polyolefin. Specifically, the polymer is one or more selected from a group consisting of polyethylene, polypropylene and polymethyl methacrylate.

In some embodiments, the polymer has a melt flow index of 5 g/10 min to 15 g/10 min according to ISO 1133. The melt flow index can facilitate a uniform mixing of the polymer, the acid-modified lignin and compatibilizer to enhance compatibility between the polymer and the acid-modified lignin. Preferably, the melt flow index of the polymer is 8 g/10 min to 13 g/10 min.

The acid-modified lignin is obtained by performing a surface-modification to a lignin to generate acidic groups on a surface of the lignin. For example, hydroxy groups and/or phenol groups in a surface of the lignin can be oxidized into phosphorous acid groups by using an oxidizing agent, such as P₂O₅. The acidic groups on the surface of the lignin can function as catalysis for a reaction between the acid-modified lignin and the polymer, which is discussed detail later.

The term "mechanical strength" of the present invention herein refers to "impact strength and Young's modulus". The impact strength and the Young's modulus of the thermoplastic composite are measured according to ASTM D256 and ASTM D638 Type IV, respectively. The impact strength and the Young's modulus are used to evaluate a toughness and a stiffness of the resulted thermoplastic composite, respectively. When the polymer is the nonpolar polymer, impact strength and Young's modulus of the resulted thermoplastic composite are more than 3.0 kJ/m² and more than 2.0 GPa, respectively. When the polymer is the polar polymer, impact strength and Young's modulus of the resulted thermoplastic composite are more than 1.1 kJ/m² and more than 3.5 GPa, respectively.

In some embodiments, the acidic groups on the surface of the acid-modified lignin comprise phosphoric acid groups, sulfuric acid groups and/or nitric acid groups. An amount of acidic groups on the surface of the acid-modified lignin can be defined as an element content of an element contained in the acidic groups. Specifically, the element comprises phosphorus, sulfur and/or nitrogen. Further, the element content can be measured by an element analysis with X-ray photoelectron spectroscopy (XSP), and be calculated based on a weight of the acid-modified lignin as 100 weight percent.

The aforementioned element content is 10 weight percent to 20 weight percent, and preferably is 12 weight percent to 16 weight percent. If the element content is less than 10 weight percent, the compatibility between the polymer and the acid-modified lignin is decreased, such that the mechanical strength of the resulted thermoplastic composite is decreased. If the element content is more than 20 weight percent, the impact strength of the resulted thermoplastic composite is enhanced, but the Young's modulus thereof is decreased.

In some embodiments, an average particle size of the acid-modified lignin is 0.05 µm to 10 µm, and preferably is 0.1 µm to 10 µm. When the average particle size of the acid-modified lignin is in the aforementioned range, it is beneficial to disperse the acid-modified lignin within the polymer uniformly, thereby enhancing the mechanical strength of the resulted thermoplastic composite.

The compatibilizer is used to enhance the compatibility between the polymer and the acid-modified lignin. Further, the compatibilizer is a maleic anhydride grafted copolymer, which is made of styrene, ethylene, and butylene. The maleic anhydride grafted copolymer is referred to as MA-SEBS. In detail, maleic anhydride groups of the compatibilizer can react with hydroxy groups of the acid-modified lignin to occur an esterification. The esterification can be catalyzed by the acidic groups on the surface of the acid-modified lignin, such that the esterification in-situ occurs. Therefore, the compatibility between the polymer and the acid-modified lignin can be increased, thereby enhancing a mechanical strength of the resulted thermoplastic composite.

During the esterification catalyzed by the acidic groups, each of the maleic anhydride groups is decomposed to generate two carboxylic acid groups with the catalysis of the acidic groups, and an ester bond is formed by reacting one of two carboxylic acid groups with a hydroxyl group of the acid-modified lignin. In some embodiments, when the polymer comprises polymethyl methacrylate, the other carboxylic acid group generated from the maleic anhydride group can sever as a hydrophilic moiety for interacting with a hydrophilic group of the polymethyl methacrylate, thereby enhancing the compatibility between the polymer and the acid-modified lignin, and uniformly dispersing the acid-modified lignin within the polymer matrix formed from the polymer. It can be realized that the hydrophilic group of the polymethyl methacrylate comprises acrylic groups, and therefore hydrogen bonds are generated between the carboxylic acid group of the compatibilizer and the acrylic group of the polymethyl methacrylate.

In other embodiments, when the polymer comprises the polyolefin, the polyolefin is hydrophobic and can interact with a hydrophobic group of the compatibilizer, thereby enhancing the compatibility between the polymer and the acid-modified lignin and uniformly dispersing the acid-modified lignin within the polymer matrix formed from the polymer. It can be realized that a hydrophobic moiety of the polyolefin comprises alkyl and benzene ring, and Van Der Waals force is generated between the alkyl group of the compatibilizer and the alkyl group of the polyolefin.

In preferred embodiments, the acidic groups on the surface of the acid-modified lignin exclude carboxylic acid groups and maleic anhydride groups, since they cannot catalyze the esterification between the hydroxy groups of the acid-modified lignin and the maleic anhydride groups of the compatibilizer.

The compatibilizer has a maleic anhydride content of 1.0 weight percent to 2.5 weight percent, and preferably 1.2 weight percent to 2.2 weight percent according to BAM (Bundesanstalt für Materialforschung und-prüfung certification, also known as Federal Institute for Materials Research and Testing)) 1026. If the maleic anhydride content is less than 1.0 weight percent, the compatibility between the polymer and the acid-modified lignin is decreased, such that the mechanical strength of the resulted thermoplastic composite is decreased. If the maleic anhydride content is more than 2.5 weight percent, the impact strength of the thermoplastic composite produced by polymethyl methacrylate is enhanced, but Young's modulus is decreased, or mechanical strength of the thermoplastic composite produced by polyolefin is decreased.

The compatibilizer has a polystyrene content of 20 weight percent to 40 weight percent, and preferably 25 weight percent to 35 weight percent. If the polystyrene content is less than 20 weight percent, the mechanical strength of the thermoplastic composite produced by polyolefin is decreased. If the polystyrene content is more than 40 weight percent, the mechanical strength of the thermoplastic composite produced by polymethyl methacrylate is decreased.

The compatibilizer has a melt flow index of 14 g/10 min to 28 g/10 min at 230 °C according to ASTM D 1238 with a loading of 5 kg. If the melt flow index of the compatibilizer is not in the aforementioned range, the polymer, the acid-modified lignin and compatibilizer cannot be mixed uniformly, and thus the compatibility between the polymer and the acid-modified lignin is decreased.

In preferred embodiments, according to ASTM D1238, the melt flow index of the compatibilizer is 20 g/10 min to 23 g/10 min, such that the polymer, the acid-modified lignin and compatibilizer can be mixed uniformly to enhance the compatibility between the polymer and the acid-modified lignin.

In some embodiments, a ratio of a density of the polymer to a density of the compatibilizer is 0.9 to 1.1. When the ratio is in the aforementioned range, it is beneficial to uniformly mix the polymer and the compatibilizer to enhance the compatibility between the polymer and the acid-modified lignin.

Based on a weight of the thermoplastic composition as 100 weight percent, a content of the polymer is 60 weight percent to 95 weight percent, a content of the acid-modified lignin is 3 weight percent to 35 weight percent and a content of the compatibilizer is 1 weight percent to 7 weight percent. If at least one of these contents is not in the aforementioned corresponding range, the polymer, the acid-modified lignin and compatibilizer cannot be mixed uniformly, such that the compatibility between the polymer and the acid-modified lignin is decreased, and the acid-modified lignin cannot be dispersed uniformly within the polymer matrix formed from the polymer.

In some embodiments, a ratio of the content of the acid-modified lignin to the content of the compatibilizer is 2.0 to 6.0. When the aforementioned ratio is in the aforementioned range, it is beneficial to mix the polymer and the compatibilizer uniformly to enhance the compatibility between the polymer and the acid-modified lignin.

After the operation 110, the thermoplastic composition is heated to 160 °C to 190 °C, shown as operation 120. If the thermoplastic composition is heated to a temperature below 160 °C, the polymer or compatibilizer does not melt completely, such that the following blending cannot be performed. If the thermoplastic composition is heated to a temperature above 190 °C, the polymer, the acid-modified lignin and compatibilizer cannot be mixed uniformly, such that the compatibility between the polymer and the acid-modified lignin is decreased, and the acid-modified lignin cannot be dispersed uniformly within the polymer matrix formed from the polymer.

After the operation 120, the thermoplastic composition is blended for 5 minutes to 8 minutes at 160 °C to 190 °C to obtain the thermoplastic composite, shown as operation 130. In other embodiments, the operation 120 and operation 130 can be performed simultaneously. For example, the thermoplastic composition is blended under heating to 160 °C to 190 °C, and then kept being blended for 5 minutes to 8 minutes at 160 °C to 190 °C. As mentioned above, during the blending, the hydroxy groups of the acid-modified lignin react with the maleic anhydride groups of the compatibilizer to generate ester bonds via an in-situ reaction catalyzed by acidic groups of the acid-modified lignin. If the thermoplastic composition is not blended under the aforementioned conditions, the hydroxy groups of the acid-modified lignin and maleic anhydride groups of the compatibilizer can hardly react with each other, such that the acid-modified lignin cannot be dispersed uniformly within the polymer matrix formed from the polymer, and the mechanical strength of the resulted thermoplastic composite is decreased.

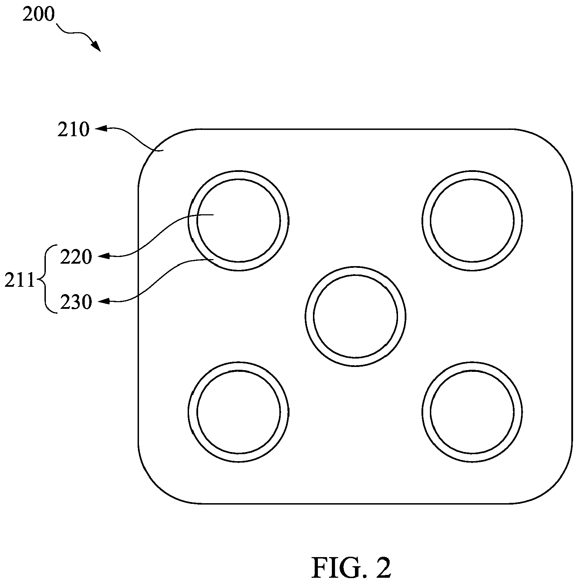

The thermoplastic composite 200 manufactured after the operation 130 comprises a polymer matrix 210 and a plurality of core-shell particles 211 embedded in the polymer matrix 210, as shown in Fig. 2. The polymer matrix 210 is formed from the aforementioned polymer.

Each of the core-shell particles 211 comprises a core 220 and a shell layer 230, in which the shell layer 230 encapsulates the core 220. In detail, the core 220 is formed from the acid-modified lignin, and the shell layer 230 is formed from the compatibilizer. As the above description, the shell layer 230 is bonded to the core 220 via the ester bonds generated by the in-situ esterified reaction catalyzed by the acidic groups of the acid-modified lignin.

An average particle size of the core-shell particles 211 is 0.1 µm to 11 µm. When the average particle size is in the aforementioned range, the core-shell particles 211 are easily and uniformly dispersed within the polymer matrix 210, thereby further enhancing the mechanical strength of the resulted thermoplastic composite 200.

In some embodiments, a thickness of the shell layer 230 is 0.1 µm to 0.8 µm, and preferably is 0.2 µm to 0.6 µm. When the thickness of the shell layer 230 is in the aforementioned range, the shell layer 230 can serve as a buffer layer between the core 220 and the polymer matrix 210 to absorb or transfer impact energy from surrounding, thereby further enhancing the mechanical strength of the resulted thermoplastic composite 200.

In some embodiments, a dispersity of the core-shell particles 211 is 1 × 10⁴ grain/mm² to 6 x 10⁴ grain/mm², and preferably is 1.1 × 10⁴ grain/mm² to 5.8 x 10⁴ grain/mm². When the dispersity is in the aforementioned range, the core-shell particles 211 has an excellent dispersity to be more uniformly dispersed within the polymer matrix 210, thereby further enhancing the mechanical strength of the resulted thermoplastic composite 200.

When the nonpolar polymer is used to produce the thermoplastic composite 200, the resulted thermoplastic composite 200 has an impact strength of more than 3.0 kJ/m² and a Young's modulus of more than 2.0 GPa. When the polar polymer is used to produce the thermoplastic composite 200, the resulted thermoplastic composite 200 has an impact strength of more than 1.1 kJ/m² and a Young's modulus of more than 3.5 MPa.

### Preparation of phosphorous acid modified lignin

25 g of lignin, 15 g P₂O₅ and dioxane were mixed and heated to 78 °C, and reacted at 78 °C for 8 hours to obtain a product. Then, the product was washed with methanol and purified by centrifugation, and then dried to obtain the phosphorous acid modified lignin.

### Production of thermoplastic composite

### Embodiment 1

According to a thermoplastic composition shown in Table 1, the thermoplastic composition was prepared, and then heated to 160 °C to 190 °C. At 160 °C to 190 °C, the thermoplastic composition was blended for 5 minutes to 8 minutes to obtain the thermoplastic composite. A melt flow index of polypropylene was 10 g/10 min according to ISO 1133. The element content of phosphorus of the phosphoric acid-modified lignin was 14.5 weight percent determined by XSP, and an average particle size of the phosphoric acid-modified lignin was 0.1 µm to 10 µm. The compatibilizer has a maleic anhydride content of 1.4 weight percent to 2.0 weight percent, a polystyrene content of 30 weight percent, and a melt flow index of 22 g/10 min. Further, a ratio of a density of the polymer to a density of the compatibilizer is 0.9 to 1.1. In the thermoplastic composite, the average particle size of the core-shell particles is 0.1 µm to 11 µm, in which the thickness of the shell layer is 0.31 µm to 0.48 µm, and the dispersity of the core-shell particles is 12589.2 grain/mm².

### Embodiments 2 to 4 and comparative embodiments 1 to 4

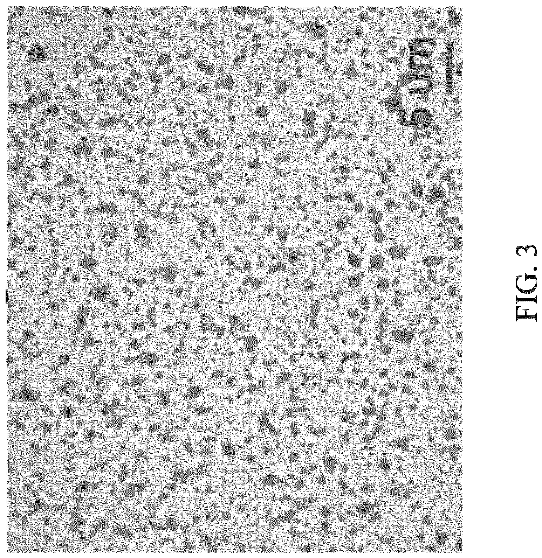

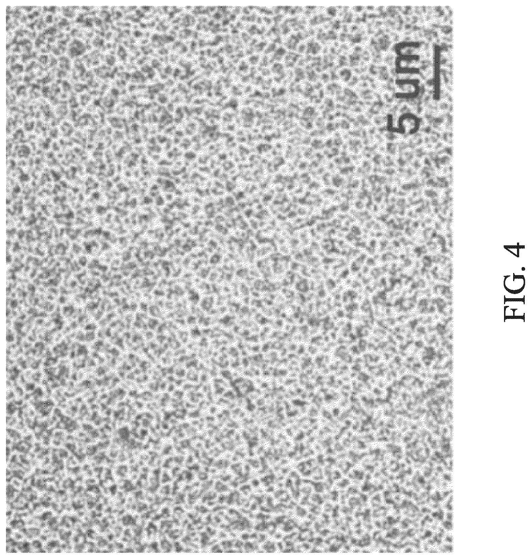

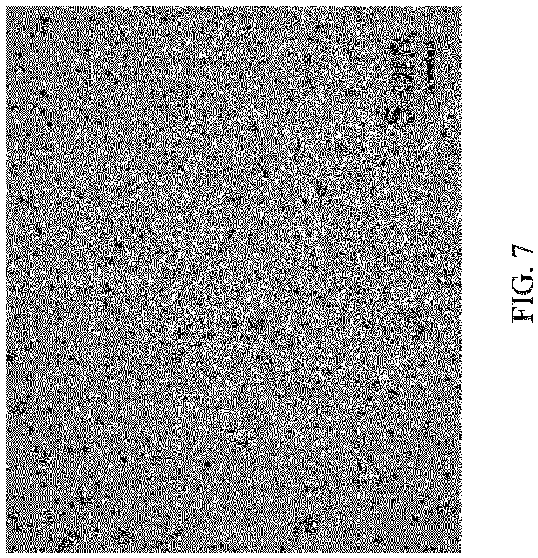

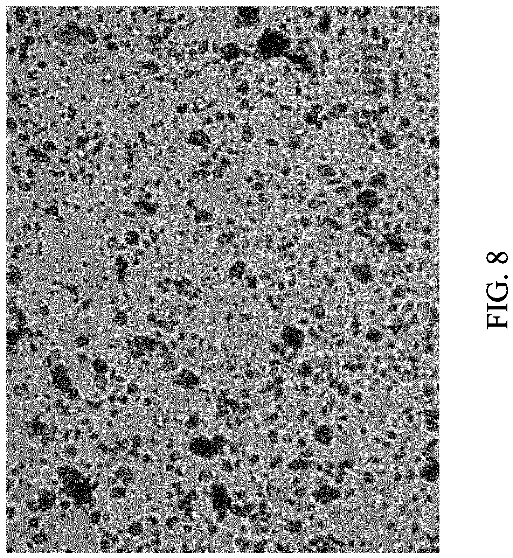

The embodiments 2 to 4 and the comparative embodiments 1 to 4 were practiced with the same method as in the embodiment 1 by varying the thermoplastic composition. Specific conditions and evaluated results of embodiments 1 to 4 and comparative embodiments 1 to 4 were shown in Table s 1 to 2 and Figs 3 to 8.

### Evaluation methods

### 1. Impact strength

The impact strength of the thermoplastic composite was measured according to ASTM D256.

### 2. Young's modulus

The Young's modulus of the thermoplastic composite was measured according to ASTM D638 Type IV.

### 3. Dispersity

The dispersity of the core-shell particles in a polymer matrix of the thermoplastic composite was observed by an optical microscopy and then the dispersity (a number of the core-shell particles within each unit area (mm²)) was calculated with an optical microscopy image. The dispersities obtained by five images taken in different locations in the polymer matrix were collected and used to calculate an average and a relative standard deviation (%) thereof. When the relative standard deviation thereof was less than 10 %, the core-shell particles have a good dispersity within the polymer matrix.

### 4. Average particle size of core-shell particles

The core-shell particles were observed by an optical microscopy and then the average particle size of core-shell particles was determined by an image taken by a transmission electron microscopy (TEM).

### 5. Thickness of shell layer

The shell layers of the core-shell particles were observed by an electron microscopy and then the thickness of shell layer of core-shell particles was determined by an image taken by a transmission electron microscopy (TEM).

**Table 1**

| | | | Embodiment | | Comparative embodiment | |
|---|---|---|---|---|---|---|
| | | | 1 | 2 | 1 | 2 |
| Composition | Polymer | Type | Polypropylene | | | |
| | | Content (wt. %) | 93 | 65 | 100 | 68 |
| | Filler | Type | Phosphorous acid modified lignin | | None | Lignin |
| | | Content (wt. %) | 5 | 30 | 0 | 30 |
| | Compatibilizer | Type | MA-SEBS | | None | MA-SEBS |
| | | Content (wt. %) | 2 | 5 | 0 | 2 |
| Blending condition | Temperature (°C) | | 180 | | | |
| | Speed (rpm) | | 50 | | | |
| | Time (minute) | | 7 | | | |
| Composite | Impact strength (kJ/m²) | | 3.5 ± 0.0022 | 4.9 ± 0.0032 | 2.1 ± 0.0012 | 1.6 ± 0.0051 |
| | Young's modulus (GPa) | | 2.32 ± 0.07 | 2.96 ± 0.01 | 1.55 ± 0.11 | 0.67 ± 0.29 |
| | Dispersity | | Good | Good | N/A | Bad |

| | | | | | | |
|---|---|---|---|---|---|---|
| "N/A" represented that the teat of the dispersity of the core-shell particles was not performed. | | | | | | |

**Table 2**

| | | | Embodiment | | Comparative embodiment | |
|---|---|---|---|---|---|---|
| | | | 3 | 4 | 3 | 4 |
| Composition | Polymer | Type | Polymethyl methacrylate | | | |
| | | Content (wt. %) | 93 | 65 | 100 | 68 |
| | Filler | Type | Phosphorous acid modified lignin | | None | Lignin |
| | | Content (wt. %) | 5 | 30 | 0 | 30 |
| | Compatibilizer | Type | MA-SEBS | | None | MA-SEBS |
| | | Content (wt. %) | 2 | 5 | 0 | 2 |
| Blending condition | Temperature (°C) | | 180 | | | |
| | Speed (rpm) | | 50 | | | |
| | Time (minute) | | 7 | | | |
| Composite | Impact strength (kJ/m²) | | 1.11 ± 0.09 | 1.12 ± 0.13 | 1.03 ± 0.11 | 0.93 ± 0.13 |
| | Young's modulus (GPa) | | 4.27 ± 0.11 | 3.95 ± 0.35 | 3.13 ± 0.31 | 2.63 ± 009 |
| | Dispersity | | Good | Good | N/A | Bad |

| | | | | | | |
|---|---|---|---|---|---|---|
| "N/A" represented that the teat of the dispersity of the core-shell particles was not performed. | | | | | | |

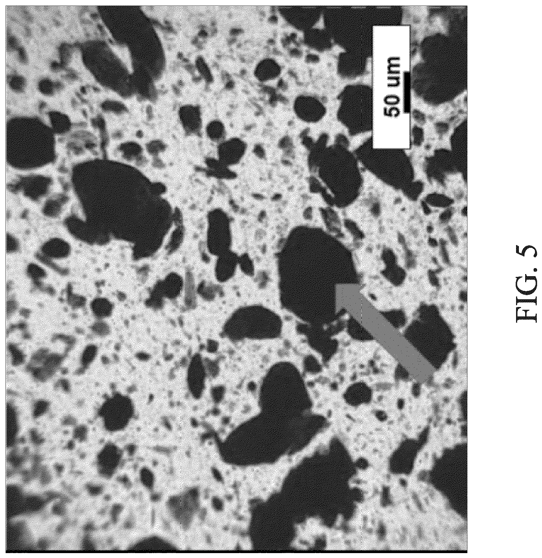

Referring to Table 1 and Figs. 3 to 5, comparing with comparative embodiments 1 and 2, polypropylene and the acid-modified lignin were used to produce thermoplastic composite in embodiments 1 and 2, such that the core-shell particles were dispersed uniformly within the polymer matrix of the resulted thermoplastic composite. The dispersities of the core-shell particles in the polymer matrix of the embodiments 1 and 2 were 12589.2 grain/mm² and 56227.7 grain/mm², respectively. Besides, a red arrow indicted an aggregation of the cores formed from the lignin in Fig. 5. Therefore, the acid-modified lignin can enhance the compatibility between the nonpolar polymer and the lignin, thereby increasing the mechanical strength of the resulted thermoplastic composite.

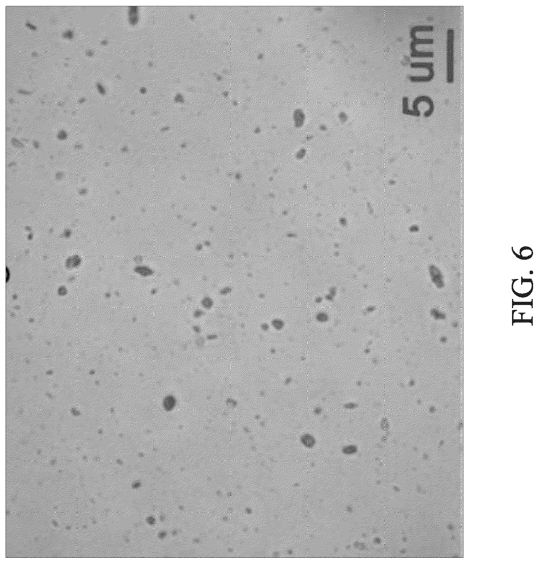

Next, referring to Table 2 and Figs. 6 to 8, comparing with comparative embodiments 3 and 4, polymethyl methacrylate and the acid-modified lignin were used to produce thermoplastic composite in embodiments 3 and 4, such that the core-shell particles were dispersed uniformly within the polymer matrix of the resulted thermoplastic composite. Therefore, the acid-modified lignin also can enhance the compatibility between the polar polymer and the lignin, thereby increasing the mechanical strength of the resulted thermoplastic composite.

In summary, in an application of the thermoplastic composition, the thermoplastic composite, and the method for producing the thermoplastic composite, the polymer, the acid-modified lignin with the specific element content of the specific element and the compatibilizer with the specific melt flow index and the specific maleic anhydride content are used to produce the thermoplastic composite. Hydroxy groups of the acid-modified lignin react with maleic anhydride groups of the compatibilizer to generate ester bonds via the in-situ reaction catalyzed by acidic groups of the acid-modified lignin to enhance the compatibility between the polar and nonpolar polymer and the lignin, thereby increasing the mechanical strength of the resulted thermoplastic composite.

Although the present invention has been disclosed in several embodiments as above mentioned, these embodiments do not intend to limit the present invention. Various changes and modifications can be made by those of ordinary skills in the art of the present invention, without departing from the spirit and scope of the present invention. Therefore, the claimed scope of the present
invention shall be defined by the appended claims.

## Claims

1. A thermoplastic composition, comprising:
a polymer, wherein the polymer is one or more selected from a group consisting of polyethylene, polypropylene and polymethyl methacrylate;
an acid-modified lignin, comprising acidic groups on a surface of the acid-modified lignin, wherein the acidic groups comprise an element, an element content of the element is 10 weight percent to 20 weight percent, based on a weight of the acid-modified lignin as 100 weight percent; and
a compatibilizer with a melt flow index of 14 g/10 min to 28 g/10 min, wherein the compatibilizer is a maleic anhydride grafted copolymer, the maleic anhydride grafted copolymer is made of styrene, ethylene and butylene, a maleic anhydride content of the compatibilizer is 1.0 weight percent to 2.5 weight percent, and a polystyrene content of the compatibilizer is 20 weight percent to 40 weight percent,
wherein a content of the polymer is 60 weight percent to 95 weight percent, a content of the acid-modified lignin is 3 weight percent to 35 weight percent and a content of the compatibilizer is 1 weight percent to 7 weight percent, based on a weight of the thermoplastic composition as 100 weight percent.

2. The thermoplastic composition of claim 1, wherein a melt flow index of the polymer is 5 g/10 min to 15 g/10 min.

3. The thermoplastic composition of any one of claims 1-2, wherein the acidic groups comprise phosphoric acid groups, sulphuric acid groups and/or nitric acid groups.

4. The thermoplastic composition of any one of claims 1-3, wherein the element comprises phosphorus, sulfur and/or nitrogen.

5. The thermoplastic composition of any one of claims 1-4, wherein an average particle size of the acid-modified lignin is 0.05 µm to 10 µm.

6. The thermoplastic composition of any one of claims 1-5, wherein a melt flow index of the compatibilizer is 20 g/10 min to 23 g/10 min.

7. The thermoplastic composition of any one of claims 1-6, wherein a ratio of a density of the polymer to a density of the compatibilizer is 0.9 to 1.1.

8. The thermoplastic composition of any one of claims 1-7, wherein a ratio of the content of the acid-modified lignin to the content of the compatibilizer is 2.0 to 6.0.

9. A method for producing a thermoplastic composite, comprising:
providing a thermoplastic composition of any one of claims 1-8, wherein the thermoplastic composition comprises a polymer, an acid-modified lignin, and a compatibilizer;
heating the thermoplastic composition to 160 °C to 190 °C; and
after the thermoplastic composition is heated, blending the thermoplastic composition for 5 minutes to 8 minutes at 160 °C to 190 °C to obtain the thermoplastic composite,
wherein during the blending of the thermoplastic composition, hydroxy groups of the acid-modified lignin react with maleic anhydride groups of the compatibilizer to generate ester bonds via an in-situ reaction, and the in-situ reaction is catalyzed by acidic groups of the acid-modified lignin.

10. A thermoplastic composite (200), comprising:
a polymer matrix (210) formed from a polymer, wherein the polymer is one or more selected from a group consisting of polyethylene, polypropylene and polymethyl methacrylate; and
a plurality of core-shell particles (211) embedded in the polymer matrix (210), wherein the plurality of the core-shell particles (211) each comprises:
a core (220) formed from an acid-modified lignin, wherein the acid-modified lignin comprises acidic groups on a surface of the acid-modified lignin, the acidic groups comprise an element, an element content of the element is 10 weight percent to 20 weight percent, based on a weight of the acid-modified lignin as 100 weight percent; and
a shell layer (230) encapsulating the core (220), wherein the shell layer (230) is formed from a compatibilizer with a melt flow index of 14 g/10 min to 28 g/10 min, the compatibilizer is a maleic anhydride grafted copolymer, the maleic anhydride grafted copolymer is made of styrene, ethylene and butylene, a maleic anhydride content of the compatibilizer is 1.0 weight percent to 2.5 weight percent, and a polystyrene content of the compatibilizer is 20 weight percent to 40 weight percent,
wherein an average particle size of the plurality of the core-shell particles (211) is 0.1 µm to 11 µm.

11. The thermoplastic composite (200) of claim 10, wherein the shell layer (230) is bonded to the core (220) via ester bonds.

12. The thermoplastic composite (200) of any one of claims 10-11, wherein a thickness of the shell layer (230) is 0.1 µm to 0.8 µm.

13. The thermoplastic composite (200) of any one of claims 10-12, wherein a dispersity of the plurality of the core-shell particles (211) is 1 × 10⁴ grain/mm² to 6 x 10⁴ grain/mm².

14. The thermoplastic composite (200) of any one of claims 10-13, wherein an impact strength of the thermoplastic composite (200) is more than 1.1 kJ/m².

15. The thermoplastic composite (200) of any one of claims 10-14, wherein a Young's modulus of the thermoplastic composite (200) is more than 2.0 GPa.
